# EUROPEAN PATENT APPLICATION

(11) **EP 4 748 800 A1**
(43) Date of publication of application: **27.05.2026**
(21) Application number: 25217826.4
(22) Date of filing: 21.11.2025
(51) Int. Cl.: C02F 1/68, B01F 21/20, C02F 5/08, B01F 25/316, B01F 35/50

(54) **DOSING APPARATUS FOR CHEMICAL CONDITIONING SUBSTANCES FOR HYDRAULIC SYSTEMS**

(30) Priority: 25.11.2024 IT 202400026484
(71) Applicant: Carlo Poletti S.r.l., 28024 Gozzano (NO) (IT)
(72) Inventor: POLETTI, Stefano, 28024 Gozzano (NO) (IT)
(74) Representative: Buzzi, Notaro & Antonielli d'Oulx S.p.A.

(57) **Abstract**

Dosing apparatus for chemical conditioning substances for hydraulic systems, comprising a body (1) having a first fitting (2) and a second fitting (4) for the inlet and outlet of water and a chamber (7) in controlled communication with the fittings (2, 4) and configured to contain the conditioning substances whose residual quantity is visible from the outside through a transparent part (9) located in the lower part of the chamber (7) and protruding below the body (1).

## Description

### Field of the invention

The present invention relates to dosing apparatuses for chemical water conditioning substances for hydraulic systems, particularly, although not exclusively, boiler heating systems.

### Prior art

Such dosing apparatuses are normally installed on the pipes that, for example, carry water to the boiler of the heating system and perform a dual function: dissolving limescale making it harmless, and protecting the pipes from incrustations. For this purpose, conventional dosing apparatuses traditionally comprise a body having an inlet fitting and an outlet fitting for water and a chamber in controlled communication with the inlet and outlet fittings and configured to contain the chemical conditioning substances, typically polyphosphates in crystals or powder. During use, the polyphosphates slowly dilute in the water mixing with the outgoing flow and the charge contained in the chamber of the dosing apparatus is progressively exhausted. The residual quantity of polyphosphates within the chamber, in the crystal versions, is visible from the outside through a transparent part thereof.

A dosing apparatus of this type is described and illustrated, for example, in Italian patent no. 102020000022468, according to which the chamber for the polyphosphate charge is formed by a transparent cup-like container partially visible through one or more side windows of a container fixed to the body of the apparatus and within which the cup containing the polyphosphates is housed.

This arrangement, besides involving a high number of components, presents a dual drawback: firstly, the portions of the transparent cup visible from the outside of the apparatus are directly exposed to atmospheric agents, in particular sunlight, which can cause a certain fragility over time in the case it is made of molded plastic material. Furthermore, the water contained inside the cup is also directly exposed to sunlight in its side parts visible from the outside which, in case of long periods of non-use, can be a source of bacterial growth.

### Summary of the invention

The object of the present invention is to overcome the aforementioned drawbacks, and this object is achieved by means of a dosing apparatus of the type defined at the beginning whose peculiar characteristic lies in the fact that the transparent part of the chamber containing the chemical conditioning substances is located in the lower zone of the chamber and protrudes below the body.

Thanks to this solution idea the transparent part of the chamber can have reduced dimensions, thus solving any problems connected to water hammer, and in the case of external installations reduces or even eliminates the direct exposure of the water present in the apparatus to sunlight. This avoids the onset of bacterial growth in case of long periods of non-use of the apparatus.

According to a preferred embodiment of the invention the transparent part is formed by a dome fixed to the base of the chamber: this configuration, besides being particularly robust and resistant even in the case the transparent dome is made of molded plastic material, allows a better use of the internal volume of the chamber so as to increase the containment capacity of the polyphosphate charge. In embodiments of the invention the chamber for the polyphosphates is formed by a container connected to the body of the dosing apparatus in a removable manner and in communication with the inlet and outlet fittings and with the interior of the container through at least one calibrated radial hole.

The transparent dome is inserted into the container so as to constitute its bottom and is axially retained by means of a retaining clip inserted in a disengageable manner through holes in the container.

In all currently envisaged embodiments of the invention the dosing apparatus has a compact configuration with a small footprint, and yet particularly robust and resistant.

### Brief description of the drawings

The invention will now be described in detail with reference to the accompanying drawings, provided by way of non-limiting example only, in which:
- figure 1 is a schematic perspective view of a dosing apparatus according to a first embodiment of the invention,
- figure 2 is a side elevational view of figure 1,
- figure 3 is a vertical sectional view along line III-III of figure 2,
- figure 4 is an exploded view of figure 1,
- figure 5 shows perspectively an enlargement of the detail indicated by arrow V in figure 4,
- figure 6 is a schematic perspective view of a second embodiment of the dosing apparatus according to the invention,
- figure 7 is a side elevational view of figure 6,
- figure 8 is a vertical sectional view along line VIII-VIII of figure 7,
- figure 9 is a vertical sectional view along line IX-IX of figure 8,
- figure 10 is an exploded view of figure 6, and
- figure 11 is an enlarged perspective view of the detail indicated by arrow XI in figure 10, and
- figure 12 is a perspective view on a larger scale of a component of the dosing apparatus of figures 6-11.

### Detailed description of the invention

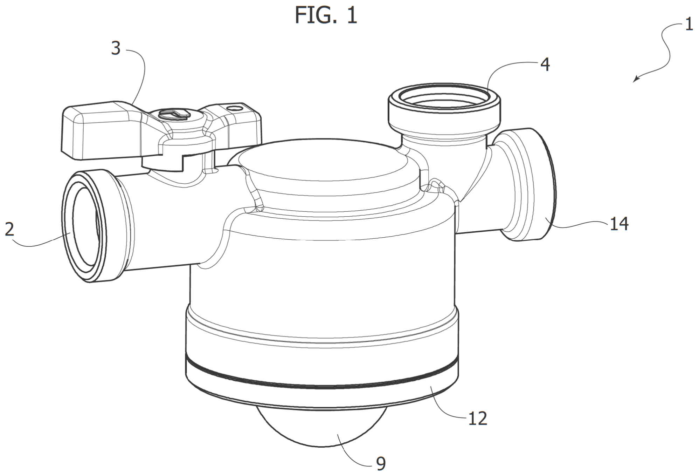

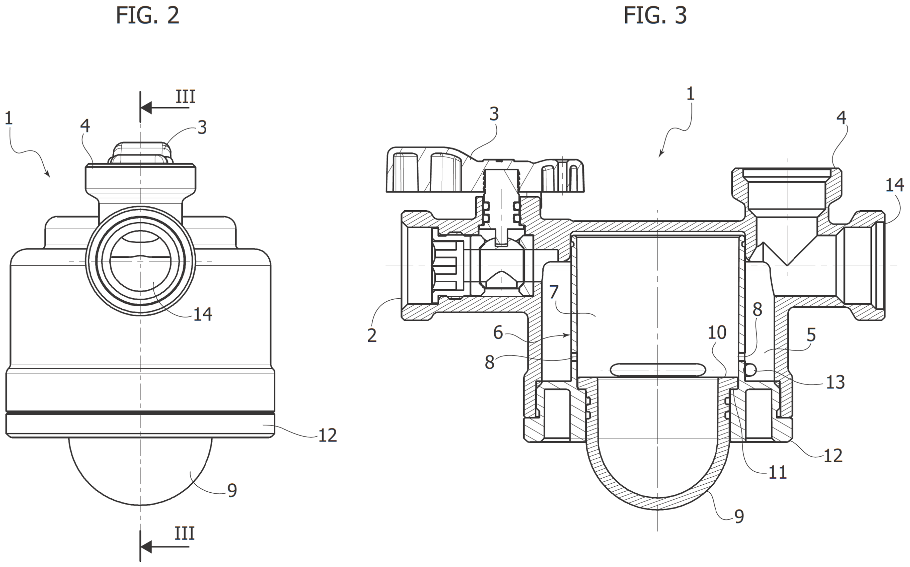

Referring initially to figures 1 to 4 the dosing apparatus for chemical conditioning substances for hydraulic systems according to a first embodiment of the invention comprises a body generically indicated by 1 having a first fitting 2 controlled by a manually operated valve 3 and a second fitting 4. The first fitting 2 can form the inlet of the doser connectable to a water network and the second fitting 4 can form the outlet of the doser intended to be connected for example to the inlet of a boiler of a domestic heating system. The arrangement is reversible in the sense that it can be inverted, i.e., the second fitting 4 can constitute the inlet fitting and the first fitting 2 can constitute the outlet fitting.

A further fitting 14 adjacent to fitting 4 is provided to contain for example a non-illustrated vent valve. The vent valve could also be provided in fitting 4.

In practice the arrangement is completely flexible as it is possible to have:
- inlet at fitting 2, outlet at fittings 4 and 14 with the vent valve indifferently in fitting 4 or in fitting 14,
- outlet at fitting 2, inlet at fittings 4 and 14 with the vent valve indifferently in fitting 4 or in fitting 14.

The body 1 delimits a cavity 5 within which a generally cup-like container 6 is housed which internally delimits a chamber 7 intended to contain the chemical conditioning substances, typically a charge of polyphosphates. The chamber 7 is in controlled communication with the cavity 5, and therefore with the fittings 2 and 4 through a pair of opposed calibrated radial holes 8.

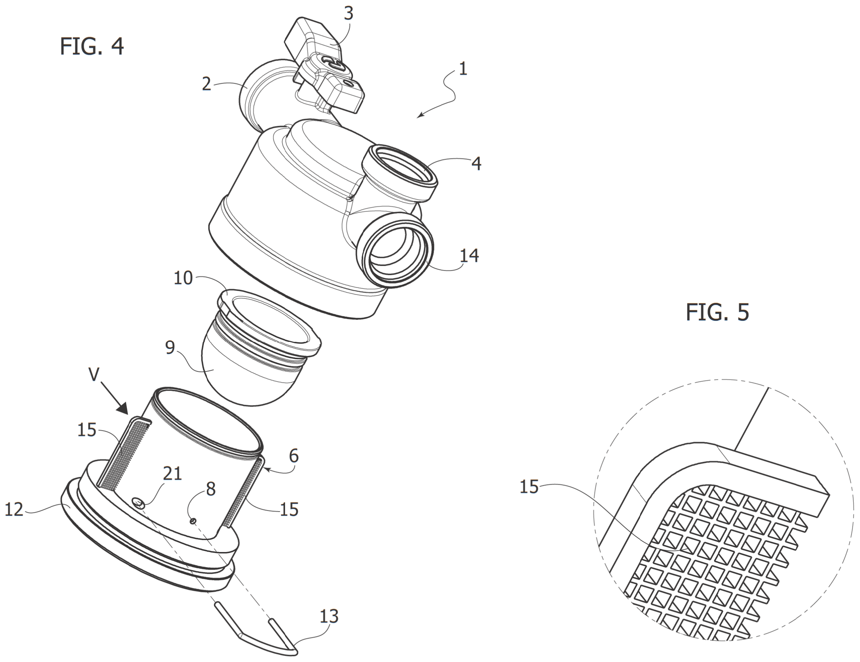

The chamber 7 is provided with a transparent part having the function of displaying, during use of the dosing apparatus, the residual quantity of polyphosphates contained therein. According to the peculiar characteristic of the invention this transparent part is located in the lower part of the chamber 7, so as to form its bottom, and protrudes below the body 1: more particularly it is formed by a dome or ogive 9 for example of transparent plastic material inserted from the top into the container 6 and having superiorly an external radial flange 10 resting on an internal radial flange 11 of the container 6. The dome 9 is radially sealed coupled with the container 6 and is axially retained in position by means of a U-shaped clip 13, inserted in a disengageable manner through holes 21 (figure 4) of the container 6. The clip 13 also partially obstructs one of the calibrated holes 8.

The container 6 is in turn provided with an external annular appendage 12 engaged with the base of the body 1, and has an axial dimension such as to be closed superiorly by the upper wall of the body 1. As seen in figure 4 the container 6 is provided with a pair of diametrically opposed axial filtering fins 15 whose configuration is represented in detail in figure 5.

During operation, the water introduced into the dosing apparatus through fitting 2 (or fitting 4) fills the cavity 5 of the body 1 and penetrates in a small part inside the chamber 7 of the container 6 to exit through fitting 4 (or fitting 2). The small part of the water that penetrates inside the chamber 7 through the calibrated holes 8 mixes with the charge of polyphosphates contained therein which are thus dragged into the main water flow. The charge of polyphosphates is visible from the outside of the dosing apparatus through the transparent dome 9, whose exposure to atmospheric agents and in particular to sunlight is effectively reduced so as to avoid the risk of bacterial growth in case of long periods of non-use of the dosing device.

In this way, a dosage of water saturated with polyphosphates in the main flow of the dosing apparatus is achieved, which has a particularly compact and at the same time robust configuration.

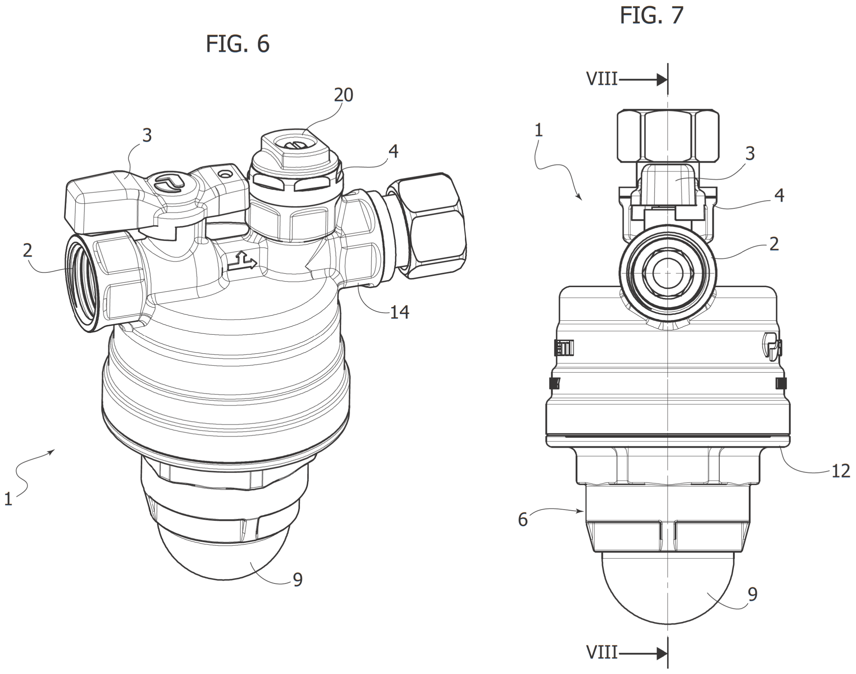

The variant of the dosing apparatus according to the invention shown in figures 6 to 10 is generally similar to the embodiment described previously with reference to figures 1 to 5, and only the differences will be described in detail using the same numerical references for identical or similar parts.

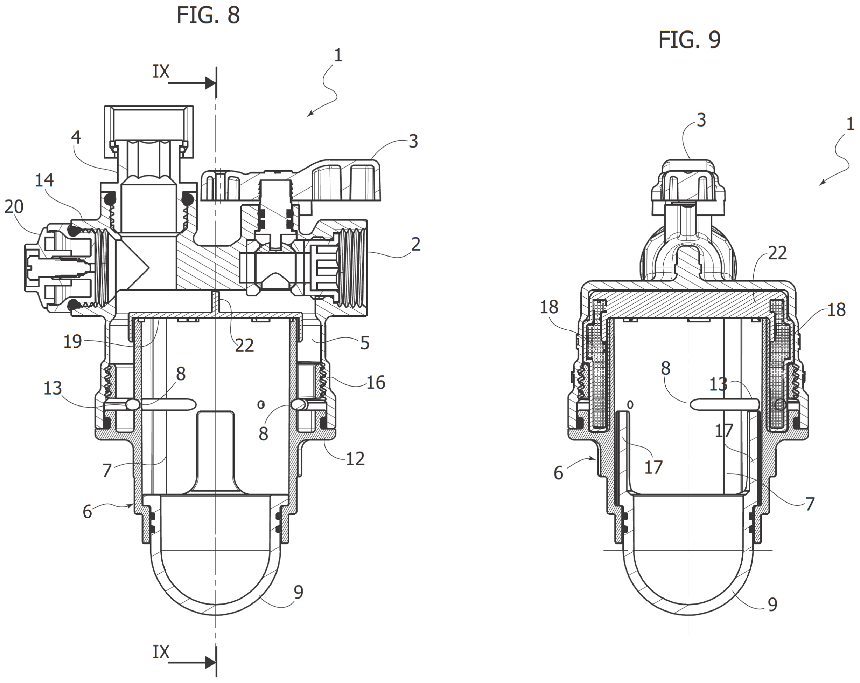

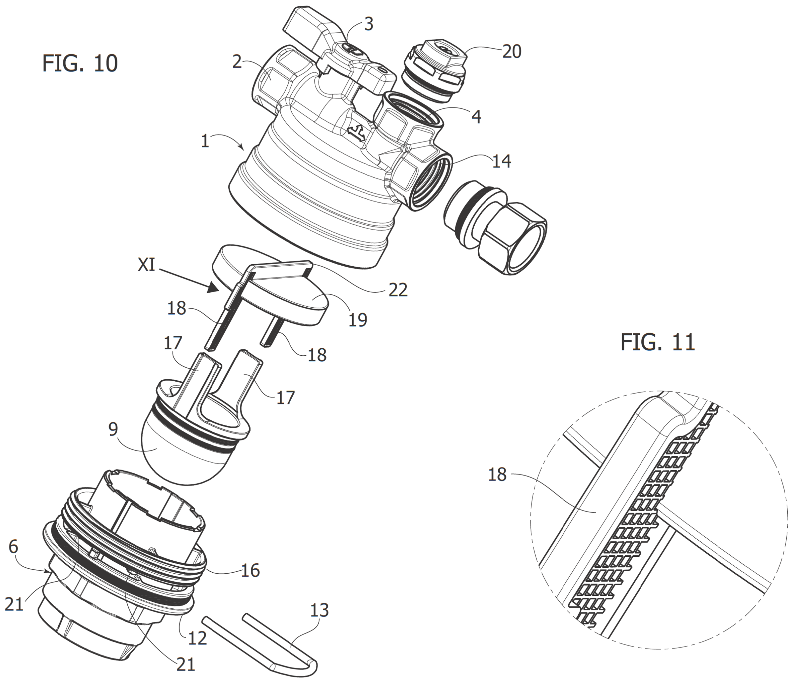

In this variant the fittings 2 and 4, also reversible in this case, are radially close together to allow installation of the doser even in confined spaces. The vent valve is indicated by 20 and is inserted into fitting 4 in the illustration of figures 6 and 10. However, the vent valve 20, as explained with reference to the first embodiment described previously, can also be inserted into fitting 14, as is shown in figures 7 and 8.

The container 6 which delimits the chamber 7 for the polyphosphate charge has a greater axial extension compared to the previous embodiment, and therefore a larger volume: it extends up to the upper wall of the body 1 and is connected to the lower part of the body 1 via a threaded coupling 16. The transparent dome 9, which in this case is also located in the lower part of the chamber 7 and protrudes below the body 1 of the dosing apparatus, has a pair of diametrically opposed axial appendages 17 which extend within the chamber 7 against the internal wall of the container 6, up to the height of the clip 13.

The axial filtering fins inserted into the cavity 5, indicated by 18, are united in this variant with a lid 19 of the container 6. Said lid 19, in the solution represented here, to be held in position has in its upper part a rib 22 which rests against the internal wall of the upper face of the body 1 creating between the chamber 7 and the upper face of the body 1 a gap that allows the entry / exit of water also from said face. In an alternative solution said lid 19 could be fixed to the container 6 for example via a thread.

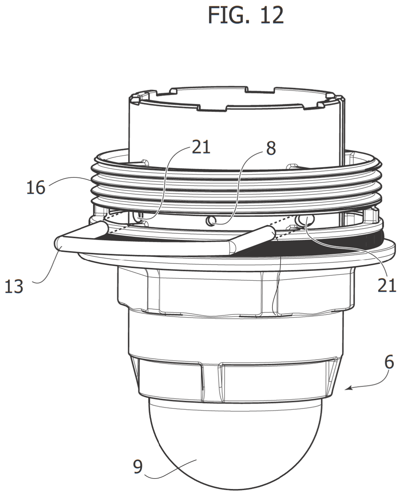

Also in this variant the transparent dome 9 is axially retained in position by means of the U-shaped clip 13, inserted in a disengageable manner through the holes 21 (figures 10 and 12) of the container 6. The clip 13 also partially obstructs one of the calibrated holes 8.

Naturally, the construction details and the embodiments can be widely varied with respect to what has been described and illustrated, without thereby departing from the scope of the present invention as defined in the claims that follow.

## Claims

1. Dosing apparatus for chemical conditioning substances for hydraulic systems, comprising a body (1) having a first fitting (2) and a second fitting (4; 14) for the inlet and outlet of water and a chamber (7) in controlled communication with said fittings (2, 4; 14) and configured to contain said chemical conditioning substances whose residual quantity is visible from the outside through a transparent part of said chamber (7), **characterized in that** said transparent part (9) is located in the lower zone of the chamber (7) and protrudes below the body (1).

2. Dosing apparatus according to claim 1, **characterized in that** said transparent part (9) is formed by a dome fixed to the base of said chamber (7).

3. Dosing apparatus according to claim 2, **characterized in that** the chamber for the chemical conditioning substances is formed by a container (6) connected to the body (1) in a removable manner and in communication with said fittings (2, 4; 14) through at least one calibrated radial hole (8).

4. Dosing apparatus according to claim 3, **characterized in that** The transparent dome is inserted into the container (6) so as to constitute its bottom and is axially retained by means of a retaining clip (13) inserted in a disengageable manner through holes (21) of the container (6).

5. Dosing apparatus according to claim 4, **characterized in that** said container (6) has two diametrically opposed calibrated holes (8, 8) of which at least one is partially obstructed by said retaining clip (13).

6. Dosing apparatus according to claim 5, **characterized in that** said container (6) is provided with a pair of diametrically opposed filtering elements (15; 18) extending axially within the body (1).
